# EUROPEAN PATENT SPECIFICATION

(11) **EP 1 913 294 B1**
(45) Date of publication and mention of the grant of the patent: **06.10.2010**
(21) Application number: 06795605.2
(22) Date of filing: 07.08.2006
(51) Int. Cl.: F16K 31/04

(54) **MANUAL AND AUTOMATIC DRIVING SYSTEM FOR VALVES AND SUPPLYING KIT THEREOF**
MANUELLES UND AUTOMATISCHES ANTRIEBSSYSTEM FÜR VENTILE UND LIEFERKIT DAFÜR
SYSTEME D'ENTRAINEMENT MANUEL ET AUTOMATIQUE POUR SOUPAPES ET KIT ASSOCIE

(30) Priority: 08.08.2005 IT TO20050566
(43) Date of publication of application: 23.04.2008
(73) Proprietor: Ferrero Rubinetterie s.r.l., 12060 Farigliano (CN) (IT)
(72) Inventor: FERRERO, Riccardo, I-12060 Farigliano (cn) (IT)
(74) Representative: Robba, Pierpaolo
(86) International application number: PCT/IB2006/052722
(87) International publication number: WO 2007/017831

(56) References cited:
- EP-A2- 1 031 778
- EP-A2- 1 174 651
- DE-A1- 19 532 590
- DE-U1-202005 000 490

## Description

### Field of the invention

The present invention concerns a manual and automatic driving system for valves, for instance rotating-stopper valves used in systems for delivering fluids, such as for instance air, water and gas, or used in systems for delivering feedstuff or other materials in powder, grain or pellet form.

The invention further concerns a kit for supplying the above system.

### State of the art

At present, it is known to produce both manually driven and motor driven rotating-stopper valves, to be used for instance in systems for delivering fluids, such as air, water and gas, or materials in powder, grain or pellet form.

In the first kind of valves, a rotating stopper is manually driven by acting e.g. on a manoeuvring lever. In the second kind of valves, the rotating stopper is driven e.g. by a motor-driven actuator comprising an electric motor - geared motor assembly, or by a pneumatic actuator.

At present, it is known to provide for using the manual drive in order to enable the valve to be operated under anomalous situations, such as for instance in case of failure, lack of power supply for the actuator or in emergency situations in general.

EP-A-1 031 778 and DE-U-202005000490 show corresponding examples of motor driven valves which can be operated manually by a handle once the motor has been removed.

EP-A-1 174 651 discloses a valve comprising a motor driven rotating stopper arranged to close and open a duct for fluid flow; the valve is equipped with a seat arranged to enable the reversible engagement of a manoeuvring lever and the drive of the rotating stopper by the lever and comprises a sliding member to uncover the seat when the lever is to be used. The valve further provides for a removable radial pin for reversible engagement of the stopper with a motor driven actuator and therefore requires complicated operations to permit the use of the handle.

In case of valves that can be also manually driven by means of a lever, the actuator displaces the lever during the motor-driven operation, with consequent dangers for people in the vicinity of the valve, the danger being the higher the higher the torque required to drive the rotating valve stopper. For instance, valves requiring driving torques of the order of the tens of Newton-meters are to be operated by rather long manoeuvring levers.

The danger for people in the vicinity of the valve is high also in some applications such as for instance in installations for delivering feedstuff in pellet or grain form in zoo-technical industry, where the valves are to be opened and closed with very fast movements.

A drive mechanism comprising a blocking device which prevents the handle to be engaged when the motor spindle is in case still rotating is disclosed in DE-A-195 32 590. However, this arrangement provides for permanent engagement between the actuator and driving spindle and therefore does not prevent damages to the motor driven actuator because of wrong and hasty manual operations of the manual manoeuvring lever.

Thus, it is an object of the present invention to provide a valve that can be driven both manually and by means of an actuator and that, during motor-driven operation, docs not create dangers for people in the vicinity of the valve.

### Summary of the invention

The above object is achieved, in a first aspect of the present invention, by a manual and automatic driving system for valves having the features set forth in claim 1.

In a second aspect of the present invention, the above object is achieved by a supplying kit having the features set forth in claim 17.

Thanks to the present invention, if the need arises, it is possible to manually operate a valve by means of the manoeuvring lever by bringing the lever into engagement with the manual engagement system. On the contrary, when the valve can be driven by a motor-driven actuator, the manoeuvring lever can be removed from the manual engagement system, whereby it is not a danger for people and things in the vicinity of the valve.

Further advantages attainable by the present invention will become more apparent, for the skilled in the art, from the following detailed description of some particular and non-limiting exemplary embodiments, shown in the following Figures.

### List of the Figures

Fig. 1 is a side view, partly in cross section according to longitudinal section plane A-A, of an embodiment of an actuator - valve assembly which is not part of the invention;
Fig. 1A is the cross-sectional view according to section plane A-A, of a detail of the fastening region of the joint fastening the actuator to the valve depicted in Fig. 1;
Fig. 2 is a perspective view of the connecting shaft of the actuator - valve assembly depicted in Fig. 1;
Fig. 3 is a perspective view, partly exploded, of an assembly including a rotating stopper valve and the respective actuator, in a first embodiment of the present invention;
Fig. 4 is a side view, partly in cross section according to longitudinal section plane A-A, of the assembly depicted in Fig. 3;
Fig. 4A is a side view, partly in cross section according to section plane B-B orthogonal to section plane A-A, of the assembly depicted in Fig. 3;
Fig. 5 is a perspective view of the connecting shaft of the actuator - valve assembly depicted in Fig. 3;
Fig. 6 is a side view of the tapered end of the manoeuvring lever of the assembly depicted in Fig. 3;
Fig. 7 is a side view, partly in cross section according to longitudinal section plane A-A, of a second embodiment of an assembly including a joint for connection with an actuator and a valve according to the present invention.

### Detailed description

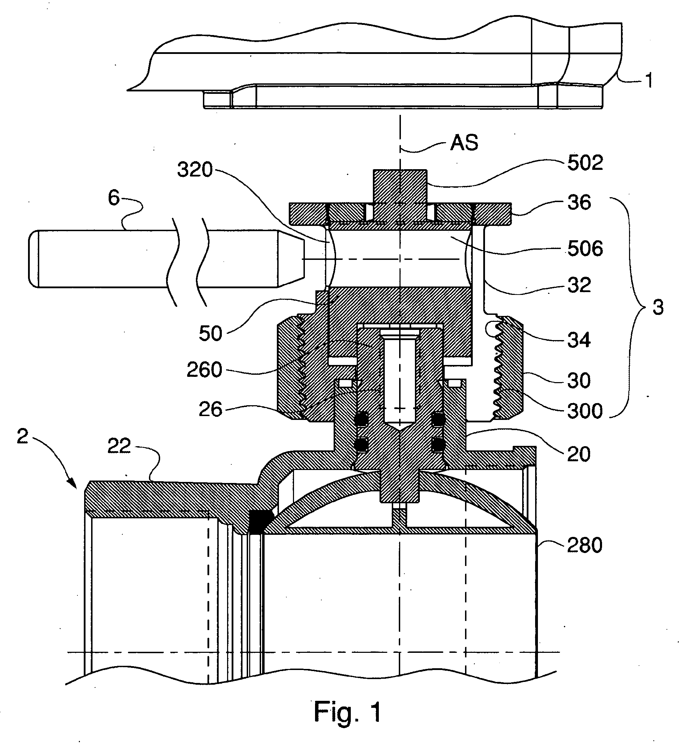

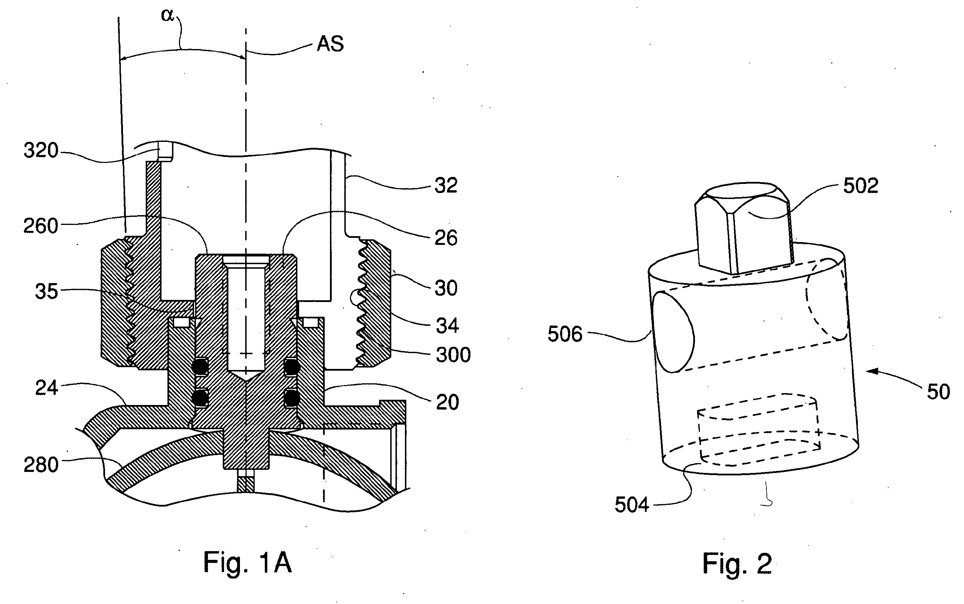

Figs. 1 and 2 relate to a first exemplary embodiment of a valve in which actuator 1, comprising a rotary electric motor and a geared motor, not shown, is connected to valve 2 by means of connecting system 3. Such a connecting system 3 comprises a locking nut 30 adapted to be screwed, thanks to internal threaded portion 300, onto male threaded portion 34 of a tubular sleeve 32.

Said tubular sleeve may be fastened, at a first end thereof, to electric actuator 1 by means of fastening flange 36. At the other end, tubular sleeve 32 is fastened onto valve 2 by fitting it onto a suitably shaped fastening head 20, e. g. approximately cylindrical or prismatic or shaped as a male insert of another shape, formed onto body or external casing 22 of valve 2, as it will be disclosed in more detail below.

Internally hollow fastening head 20 houses a driving pin 26, the rotation of which causes rotation of ball stopper 280 so as to open or close valve 2.

Actuator I is mechanically coupled with driving pin 26, so as to drive it, through connecting shaft 50. The shaft is inserted into tubular sleeve 32 so as to be rotatable about an axis AS and to engage the geared motor of actuator 1 by means of upper shaft end 502, shaped as a square male insert, and to engage upper end 260 of driving pin 26 by means of the lower shaft end, through quadrangular female seating 504 (Fig. 2).

The connecting shaft 50 is provided with a driving interface portion 506, formed in the present example as a through-hole 506 into which a manoeuvring bar or lever 6 can be inserted in reversible manner in order to manually rotate rotating stopper 280 only when necessary, for instance in case of failure or lack of power supply of actuator 1. On the contrary, when valve 2 is driven by motor-driven actuator 1, lever 6 can be removed from hole 506, whereby it is not a danger for people in the vicinity or valve 2.

Correspondingly, the tubular sleeve has at least one opening 320 through which lever 6 can be inserted into hole 506.

Preferably, but not necessarily, one end of lever 6 is suitably tapered or sharpened in order to facilitate the lever insertion into hole 506 serving as driving interface.

In the exemplary embodiment of Figs. 1 and 2, connecting shaft 50 is not slidable along its rotation axis AS relative to driving pin 26, rotating stopper 280 and tubular sleeve 32.

Preferably, but not necessarily, both in the present exemplary embodiment (Figs. 1 and 2) and in the embodiment disclosed hereinafter, driving interface 506 is located on one side of shaft 50, 50', whereas square male insert 502, or any other interface for engagement with actuator 1, is preferably located on top of shaft 50, 50'. More particularly, if the driving interface comprises a hole 506, preferably, but not necessarily, such hole extends transversally of rotation axis AS of rotating shaft 50, 50'.

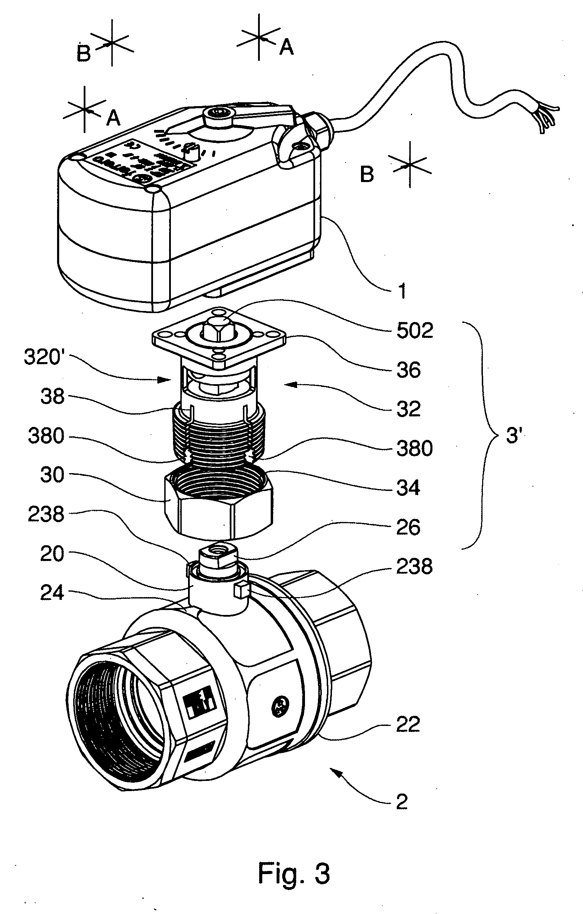

Figs. 3 to 6 relate to a first embodiment of a driving system according to the present invention.

In this embodiment too actuator 1 is mechanically coupled with driving pin 26, so as to drive it, through connecting shaft 50' that is inserted into tubular sleeve 32.

Contrary to the embodiment of Figs. 1 and 2, in the embodiment of Figs. 3 to 6 connecting shaft 50' includes a mobile switching member 508 which is slidable along rotation axis AS of the same connecting shaft 50', so that its upper end can engage actuator 1 and be disengaged therefrom in reversible manner.

At its bottom end, mobile switching member 508 engages, for instance by means of projection in form of a square male member 510, a corresponding female seating 512 with approximately quadrangular cross-section formed in a lower coupling member 514, so as to be slidable relative to the same member 514 along rotation axis AS.

In the present exemplary embodiment, female seating 512 with approximately quadrangular cross-section extends through lower coupling member 514 from one end to the other and it is fitted onto upper end 260 of driving pin 26. In this way, mobile switching member 508 can cause rotation of rotating stopper 208 about axis AS.

Mobile switching member 508 further has a through-hole 506 into which a manoeuvring bar or lever 6 can be inserted in reversible manner in order to manually rotate rotating stopper 280. Preferably, the hole 506, or any other driving interface 506, extends transversally of rotation axis AS of rotating shaft 50' and/or transversally of the sliding or displacement direction of mobile switching member 508 relative to opening 320, to tubular sleeve 32 or generally to the casing of joint 32, or yet to rotating stopper 280.

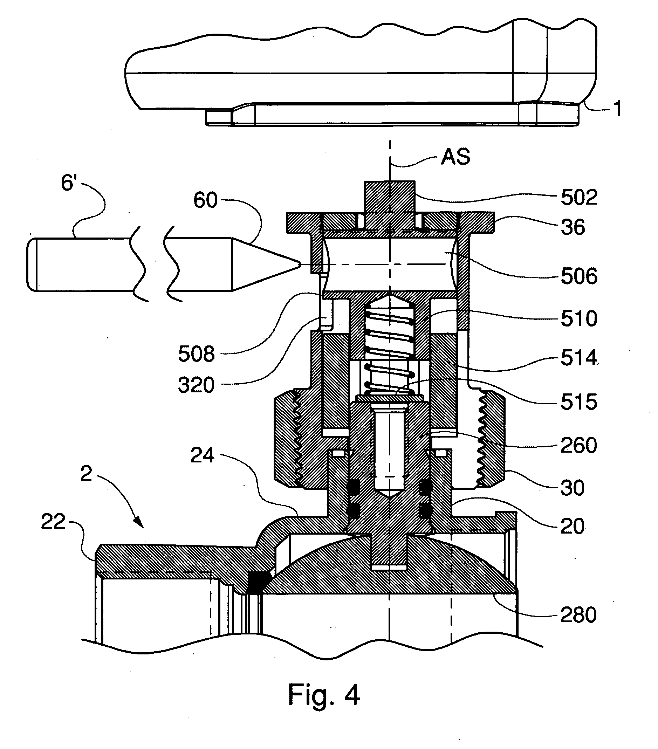

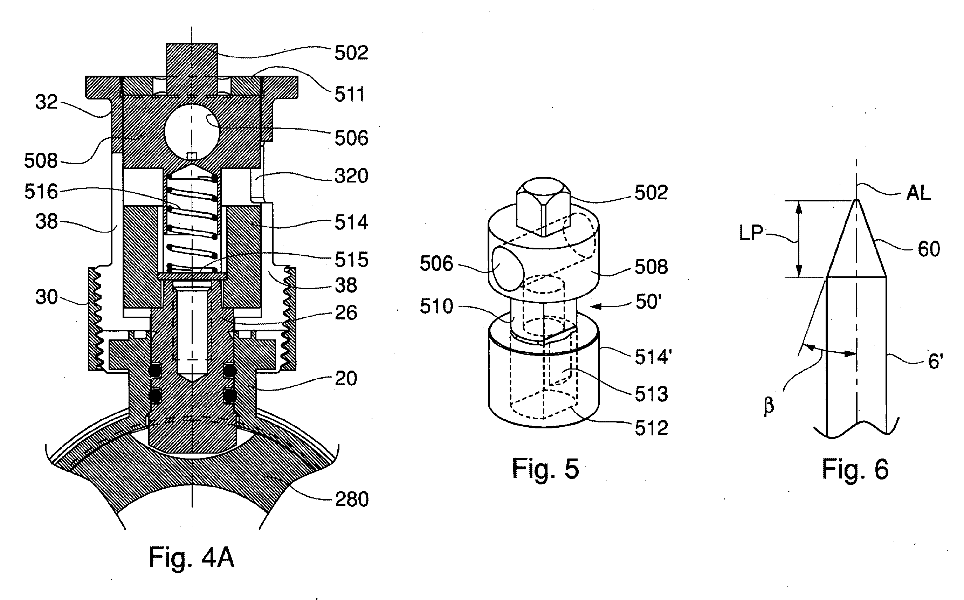

Female seating 512 with approximately quadrangular cross-section further has, along its major sides, two longitudinal recesses 513 (Figs. 4A, 5), e.g. in the shape of cylinder sectors, which end at their bottom with an abutment surface onto which washer 515 can rest. Coil spring 516 rests onto washer 515 and pushes mobile switching member 508 upwards, against threaded ring 511 or other suitable end-of-stroke abutment for tubular sleeve 32. Such a position, shown in Fig. 4, is referred to in the present description as "motor-driven manoeuvre position". A suitable opening 320 is formed in the wall of tubular sleeve 32.

When mobile switching member 508 is lifted in the motor-driven manoeuvre position, upper end 502 engages the output shaft of actuator 1 and opening 320 at least partially closes hole 506, thereby preventing, or at least hindering to a greater extent, insertion of a manoeuvring lever, e.g. lever 6' shown in Fig. 4, into hole 506.

On the contrary, when mobile switching member 508 is in a suitable lower position, referred to hereinafter as "manual manoeuvre position", upper end 502 is disengaged from actuator 1 and opening 320 completely enables, or at least hinders to a far lower extent than in the motor-driven manoeuvre position, insertion of a lever, e.g. lever 6' shown in Fig. 4, into manoeuvring hole 506.

Thus, manoeuvring switching member 508, hole 506 thereof and opening 320 form a kind of very simple, reliable and cost-effective error-preventing system of guillotine type that, if suitably designed, renders in practice very unlikely, or even impossible, damaging actuator 1 because of a wrong and hasty manual operation of member 508 through a manoeuvring lever. Indeed, should an operator, in an emergency situation, rotate stopper 280 by inserting a lever into hole 506 while end 502 of the mobile switching member is still in engagement with the output of actuator 1, this could damage for instance the geared motor of the same actuator 1.

Advantageously, manoeuvring lever 6' has a sharpened or at least tapered end 60, e.g. conical or frusto-conical, adapted to enter the small portion (referred to in the present description also as "driving passage") of the opening of hole 506 left open by opening 320 in the motor-driven manoeuvre position, and to push manoeuvring switching member 508 downwards to the manual manoeuvre position when lever 6' is inserted into manoeuvring hole 506. In this way, damages to actuator 1 can be prevented without need of inserting more complex and expensive safety devices, such as clutches and torque limiters, between the motor of actuator 1 and rotating stopper 280 of the valve to be driven.

When, as in the example of Fig. 4, manoeuvring lever 6' is suitably chosen so as to be particularly well suited to driving interface 506 of a valve 2 - actuator 1 assembly, or to joint 3 alone arranged to connect a valve 2 to an actuator 1, said lever can be provided and commercialised in a supplying kit along with a valve 2 - actuator 1 assembly, or with a joint 3. For instance, one or more levers 6, 6' and a corresponding number of joints 3, or of valve 2 - actuator 1 assemblies, could be included into a single package.

Advantageously, sharpened or generally tapered end 60 of manoeuvring lever 6' has a length that is at least 30%, and more preferably at least 50%, of the length of manual driving hole 506.

Advantageously, the sides of tapered end 60 of manoeuvring lever 6' have an inclination angle β, relative to axis AL of lever 6, not exceeding about 45°, and preferably not exceeding about 30°. Possibly, angle β is also variable along axis AL. In the exemplary embodiment of Figs. 3 to 6, manoeuvring lever 6' has a conical end 60 with an inclination angle β of about 20°.

Thanks to such shapes of the end of lever 6', an operator is compelled to deeply insert the lever into hole 506 before being able to exert a sufficient torque onto mobile switching member 508, and thus the operator is compelled to wholly disengage mobile switching member 508 from motor-driven actuator 1 before manually operating the switching member.

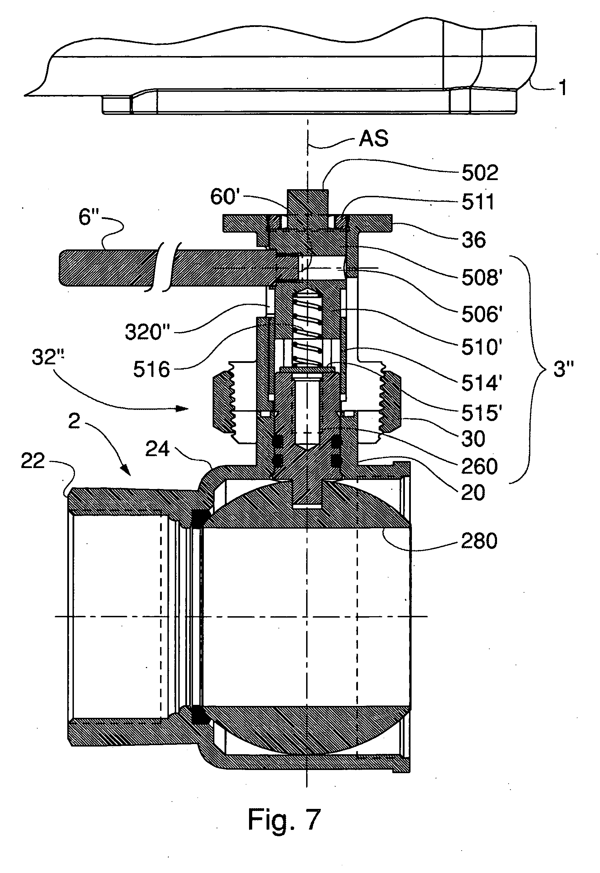

Fig. 7 relates to a second embodiment of a driving system according to the present invention.

According to this embodiment, contrary to the embodiment of Figs. 3 to 6, an opening 320" is formed in the wall of tubular sleeve 32" and it leaves manoeuvring hole 506' completely accessible even when mobile switching member 508' is at the upper end of its stroke because of the thrust of spring 516 and engages actuator 1. Thus, manoeuvring lever 6", while being removable, can be left permanently inserted into driving interface 506', for instance in case of heating or conditioning installations or in other cases in which motor-driven actuator 1 is not to operate valve 2 very quickly.

In the exemplary embodiment of Fig. 7, driving interface 506' comprises a partly threaded hole extending into mobile switching member 508' transversally of the rotation axis of mobile stopper 280 or, generally, transversally of rotation axis AS of mobile switching member 508'.

In order to manually operate joint 3" shown in Fig. 7 without damaging motor-driven actuator 1, the operator, after having seized with one hand the manoeuvring lever, pushes it downwards along with member 508', thereby disengaging male insert 502 from a corresponding female seating, not shown, in actuator 1.

To resume the drive of valve 2 through actuator 1, it is sufficient to release lever 6". Spring 516 pushes the lever upwards into abutment with threaded ring 511. Motor-driven actuator 1, once powered, begins rotating its female seating as long as the latter takes an orientation such that it allows male insert 502 to penetrate into the seating and to engage it thanks to the thrust of spring 516.

The system for fastening motor-driven actuator 1 to the body of valve 2 in the embodiments of Figs. 1 to 7 is now described in greater details. Such a system is also disclosed in a copending patent application filed on the same date and by the same Applicant of the present application.

In the exemplary embodiments of Figs. 1 to 7, the lower end of sleeve 32 has a plurality of longitudinal tongues or projections 40 circumferentially arranged about the sleeve axis and separated by a plurality of longitudinal notches 38 (Fig. 3), and threaded areas 34 and 300 of sleeve 32 and of locking nut 30 define tapered threads such that locking nut 30, when being screwed onto sleeve 32, tightens the set of longitudinal tongues 40 and presses them against the sides of fastening head 20 (Fig. 2). In the present exemplary embodiment, even though it is not necessary, disengagement of tubular sleeve 32 from head 20 is prevented substantially due to friction only.

Reference numeral 35 in Fig. 1a denotes a circular opening into which driving pin 26 is inserted so as to freely rotate.

The exemplary embodiments disclosed above can undergo various changes and modifications without departing from the scope of the present invention.

For instance, hole 506 can be replaced by a concave seating, a male projection, a prismatic, cylindrical, conical or frusto-conical, pyramidal or frusto-pyramidal portion, a ring, a threaded area, a grooved profile, a hexagonal or prismatic seating arranged to be driven by a hexagonal or prismatic spanner, respectively. Manoeuvring lever 6 can be not only a lever suitably designed for engaging hole 506 or other manual driving interface, but also a spanner, a bar or any other member used to drive stopper 280 like a lever. Tubular sleeve 32 can be more generally replaced by a casing arranged to house connecting shaft 50, 50'. The connecting system of which locking nut 30 and longitudinal extensions 40 of the end of sleeve 32 are part, can be more generally replaced by a first connecting interface through which the casing can be fastened in reversible manner to valve 2. Also, fastening flange 36 can be more generally replaced by a second connecting interface through which the casing of joint 3 can be fastened in reversible manner to a motor-driven actuator 1. Sleeve 32 can be more generally replaced by a suitable, substantially tubular collar defining, at a free end, an opening that can be narrowed and widened and can be fitted onto valve 2 becoming fastened thereon. Locking nut 30 can be more generally replaced by a locking member 30 fitted on collar 32 and arranged to narrow or widen the collar opening by displacing along the collar itself, so as to fasten collar 32 onto valve 2.

In other embodiments, not shown, driving interface 506 is preferably so shaped that the end of a driving lever 6, 6', when engaging the driving interface, extends transversally of rotation axis AS of rotating shaft 50' and/or transversally of the sliding or displacement direction of mobile switching member 508 relative to opening 320, to tubular sleeve 32 or generally to the casing of joint 32. Spring 516 can also be replaced by other suitable resilient members or other resilient return members.

## Claims

1. A manual and automatic driving system for valves, comprising:
a) a valve (2); in turn comprising:
a1) a valve body (22) internally defining a duct for fluid flow;
a2) a rotating stopper (280) arranged to close and open the duct for fluid flow;
b) a motor-driven engagement system (502), arranged to enable a motor-driven actuator (1) to engage the valve (2) and to drive the stopper (280) thereof;
c) a manual engagement system (506) comprising a manual driving interface (506) arranged to enable the reversible engagement of a manoeuvring lever (6, 6') with the interface and the drive of the rotating stopper (280) by the lever,
**characterized in that** the system comprises a mobile switching member (508) arranged to slide at least relative to the stopper (280) and/or to the remaining parts of the motor-driven actuator (1), so as to cause the reversible engagement and disengagement of the actuator (1) with and from the stopper (280), said manual-driving interface (506) being formed on the mobile switching member (508).

2. The system as claimed in claim 1, comprising a fastening joint (3) in turn including:
- a joint casing (32), comprising a first connecting interface through which the casing (32) can be fastened in reversible manner to the valve (2), and a second connecting interface (36) through which the casing (32) can be fastened in reversible manner to the motor-driven actuator (1); and
- a connecting shaft (50'), housed within the joint casing (32) and arranged to rotate relative thereto at least about a rotation axis (AS), so as to drive the rotating stopper (280).

3. The system as claimed in claim 2, wherein the mobile switching member (508) is arranged to slide at least along the rotation axis (AS) of the connecting shaft (50') and/or of the movable stopper (280), so as to cause the reversible engagement and disengagement of the actuator (1) with and from the stopper (280).

4. The system as claimed in claim 2 or 3, wherein the fastening joint (3) is arranged to become fastened in reversible manner onto the valve (2) and comprises at least one of the motor-driven engagement system (502) and the manual engagement system (506).

5. The system as claimed in one or more of the preceding claims, wherein the manual engagement system comprises the manual driving interface (506) formed on the connecting shaft (50') and arranged to enable the reversible engagement of a manoeuvring lever (6') with the interface and the drive of the rotating stopper (280) by the lever.

6. The system as claimed in one or more of the preceding claims, wherein the manual driving interface (506) comprises one or more elements chosen out of the following group: a hole arranged to receive one end or another portion of a lever; a concave seating, a male projection, a prismatic, cylindrical, conical or frusto-conical, pyramidal or frusto-pyramidal portion, a ring, a threaded area.

7. The system as claimed in one or more of claims 2 to 6, wherein at least one of the joint casing (32) and the connecting shaft (50') defines a driving passage through which a manoeuvring lever (6') can reach the manual driving interface (506), wherein said passage has a variable shape and/or size.

8. The system as claimed at least in claims 2 and 5, wherein the joint casing (32) defines an opening (320) through which a manoeuvring lever (6') can reach the manual-driving interface (506).

9. The system as claimed in one or more of claims 2 to 8, wherein the joint casing (32) and at least part of the connecting shaft (50') are displaceable relative to each other so as to pass from a motor-driven manoeuvre position, in which the driving passage hinders the reaching of the manual driving interface (506) by a manoeuvring lever (6') to a greater extent, to a manual manoeuvre position, in which the driving passage hinders the reaching of the manual driving interface (506) by the manoeuvring lever (6') to a lesser extent than in the motor-driven manoeuvre position.

10. The system as claimed at least in claim 8, wherein the opening (320) is displaceable relative to the hole (506) belonging to the manual driving interface, thereby opening or closing the driving passage to a variable extent.

11. The system as claimed at least in claim 9, comprising a motor-driven actuator (1) secured to the fastening joint (3), wherein, at least in the motor-driven manoeuvre position, the muter-driven engagement system (502) is connected with at least one of the connecting shaft (50') and the rotating stopper (280) so as to be able to drive the rotating stopper (280).

12. The system as claimed at least in claim 9, comprising a motor-driven actuator (1) secured to the fastening joint, wherein, at least in the manual manoeuvre position, the motor-driven engagement system is disconnected from at least one of the connecting shaft (50') and the rotating stopper (280), so that it does not drive the rotating stopper (280).

13. The system as claimed in claim 2, wherein the joint casing (32) and the mobile switching member (508) arc displaceable relative to each other by sliding along the rotation axis (AS).

14. The system as claimed in one or more of the preceding claims, comprising a manoeuvring lever (6') arranged to engage in reversible manner the manual engagement system (506), thereby enabling driving the rotating stopper (280).

15. The system as claimed in claim 14, wherein the manoeuvring lever (6') has a sharpened or tapered end (60) arranged to pass through the driving passage when the system is in the motor-driven manoeuvre position, and to widen such a passage thereby disconnecting the motor-driven actuator (1) and the rotating stopper (280) from each other.

16. The system as claimed in claim 15, wherein the manoeuvring lever (6') is capable of widening the driving passage when it is inserted through the opening (320).

17. A supplying kit comprising:
a) a manual and automatic driving system for valves as claimed in one or more of claims 1 to 16;
b) a manoeuvring lever (6') arranged to engage in reversible manner the manual engagement system (506) of the driving system, thereby enabling driving the rotating stopper (280).

## Patentansprüche

1. Manuelles und automatisches Antriebssystem für Ventile mit:
a) einem Ventil (2), das seinerseits aufweist:
a1) einen Ventilkörper (22), der einen inneren Kanal für einen Fluidstrom bildet;
a2) einen drehbaren Verschluss (280), um den Kanal für den Fluidstrom zu schließen und zu öffnen;
b) ein motorbetriebenes Einstellsystem (502) zur Betätigung eines motorbetriebenen Aktuators (1), um das Ventil (2) einzustellen und den Anschlag (280) anzutreiben;
c) ein manuell antreibbares Einstellsystem (506), das einen manuell antreibbaren Anschluss (506) aufweist, um eine reversible Einstellung eines Bedienhebels (6, 6') mit dem Anschluss und dem Antrieb des drehbaren Anschlags (280) durch den Hebel zu ermöglichen,
**dadurch gekennzeichnet, dass** das System ein mobiles Schaltelement (508) aufweist, das wenigstens relativ zum Anschlag (280) und/oder zu den übrigen Teilen des motorbetriebenen Aktuators (1) gleitbar ist, um den reversiblen Eingriff und Außereingriff des Aktuators (1) mit und vom Anschlag (280) zu verursachen, wobei der manuell angetriebene Anschluss (506) auf dem mobilen Schaltelement (508) geformt ist.

2. System nach Anspruch 1 mit einer Befestigungsverbindung (3), die ihrerseits aufweist:
- ein Befestigungsgehäuse (32), das einen ersten Verbindungsanschluss, durch den das Gehäuse (32) reversierbar am Ventil (2) befestigbar ist, und einen zweiten Verbindungsanschluss (36) aufweist, durch welchen das Gehäuse (32) reversierbar mit dem motorbetriebenen Aktuator (1) verbunden werden kann; und
- eine Verbindungswelle (50'), die im Befestigungsgehäuse (32) angeordnet und relativ zu ihm um wenigstens eine Drehachse (AS) drehbar ist, um den drehbaren Anschlag (280) anzutreiben.

3. System nach Anspruch 2, wobei das mobile Schaltelement (508) so angeordnet ist, dass es wenigstens längs der Rotationsachse (AS) der Verbindungswelle (50') und/oder des bewegbaren Anschlages (280) gleitbar ist, um den reversiblen Eingriff und Außereingriff des Aktuators (1) mit und vom Anschlag (280) zu ermöglichen.

4. System nach Anspruch 2 oder 3, wobei die Befestigungsverbindung (3) so angeordnet ist, dass sie reversibel auf dem Ventil (2) befestigbar ist und wenigstens eines des motorbetriebenen Einstellsystems (502) und des manuell angetriebenen Einstellsystems (506) aufweist.

5. System nach einem oder mehreren der vorhergehenden Ansprüche, wobei das manuelle Einstellsystem den manuell antreibbaren Anschluss (506) aufweist, der auf der Verbindungswelle (50') geformt und so angeordnet ist, dass er die reversible Betätigung eines Bedienhebels (6') mit den Anschluss und dem Antrieb des drehbaren Anschlages (280) durch den Hebel ermöglicht.

6. System nach einem oder mehreren der vorhergehenden Ansprüche, wobei der manuell antreibbare Anschluss (506) einen oder mehrere, aus der folgenden Gruppe ausgewählte Elemente aufweist: eine Öffnung zur Aufnahme eines Endes oder eines anderen Teiles eines Hebels; einen konkaven Sitz, einen männlichen Vorsprung, einen prismatischen, zylindrischen, kegelförmigen oder kegelstumpfförmigen, einen pyramidenförmigen oder pyramidenstumpfförmigen Teil, einen Ring, einen Gewindebereich.

7. System nach einem oder mehreren der Ansprüche 2 bis 6, wobei das Befestigungsgehäuse (32) und die Verbindungswelle (50') einen Antriebsdurchgang bilden, durch den ein Bedienhebel (6') den manuell antreibbaren Anschluss (506) erreichen kann, wobei der Durchgang variable Form und/oder Größe hat.

8. System nach wenigstens einem der Ansprüche 2 und 5, wobei das Befestigungsgehäuse (32) eine Öffnung (320) bildet, durch die ein Bedienhebel (6') den manuell antreibbaren Anschluss (506) erreichen kann.

9. System nach einem oder mehreren der Ansprüche 2 bis 8, wobei das Befestigungsgehäuse (32) und wenigstens ein Teil der Verbindungswelle (50') relativ zueinander verschiebbar sind, um von einer motorangetriebenen Bedienposition, in welcher der Antriebsdurchgang das Erreichen des manuell antreibbaren Anschlusses (506) durch einen Bedienhebel (6') in einem größeren Ausmaß verhindert, in eine manuelle Bedienposition zu gelangen, in welcher der Antriebsdurchgang das Erreichen des manuell antreibbaren Anschlusses (506) durch den Bedienhebel (6') in einem geringeren Ausmaß als in der motorbetriebenen Bedienposition verhindert.

10. System wenigstens nach Anspruch 8, bei dem die Öffnung (320) relativ zu der zum manuell antreibbaren Anschluss gehörenden Öffnung (506) verschiebbar ist, um den Antriebsdurchlass variabel zu öffnen oder zu schließen.

11. System wenigstens nach Anspruch 9, das einen motorbetriebenen Aktuator 1 aufweist, der an der Befestigungsverbindung (3) befestigt ist, wobei wenigstens in der motorbetriebenen Bedienposition das motorbetriebene Einstellsystem (502) wenigstens mit der Verbindungswelle (50') oder dem drehbaren Anschlag (280) verbunden ist, um den rotierenden Anschlag (280) anzutreiben.

12. System wenigstens nach Anspruch 9, mit einem motorbetriebenen Aktuator (1), der mit der Befestigungsvorrichtung verbunden ist, wobei wenigstens in der manuellen Bedienposition das motorbetriebene Einstellsystem wenigstens von der Verbindungswelle (50') oder dem drehbaren Anschlag (280) getrennt ist, so dass das motorbetriebene Einstellsystem den drehbaren Anschlag (280) nicht antreibt.

13. System nach Anspruch 2, wobei das Befestigungsgehäuse (32) und das mobile Schaltelement (508) relativ zueinander durch Gleiten längs der Rotationsachse (AS) verschiebbar sind.

14. System nach einem oder mehreren der vorhergehenden Ansprüche, mit einem Bedienhebel (6'), der reversibel mit dem manuell antreibbaren Einstellsystem (506) betätigbar ist, wodurch der drehbare Anschlag (280) antreibbar ist.

15. System nach Anspruch 14, wobei der Bedienhebel (6') ein scharfes oder sich verjüngendes Ende (60) aufweist, das durch den Antriebsdurchlass passierbar ist, wenn sich das System in der motorbetriebenen Bedienposition ist, und einen solchen Durchlass aufweitet, wodurch der motorbetriebene Aktuator (1) und der drehbare Anschlag (280) voneinander trennbar sind.

16. System nach Anspruch 15, wobei der Bedienhebel (6') den Antriebsdurchlass aufweitet, wenn er durch die Öffnung (360) eingeführt wird.

17. Lieferkitt mit
a) einem manuellen und automatischen Antriebssystem für Ventile gemäß einem oder mehreren der Ansprüche 1 bis 16,
b) einem Bedienhebel (6'), der reversibel das manuelle Einstellsystem (506) des Antriebssystems betätigt, wodurch der drehbare Anschlag (280) betätigbar ist.

## Revendications

1. Système d'entraînement manuel et automatique destiné à des soupapes, comportant :
a) une soupape (2) ; comprenant, à son tour :
a1) un corps de soupape (22) définissant en interne un conduit destiné à un écoulement de fluide;
a2) un obturateur rotatif (280) agencé pour fermer et ouvrir le conduit destiné à l'écoulement de fluide ;
b) un système d'engagement entraîné par moteur (502), agencé pour permettre à un actionneur entraîné par moteur (1) de s'engager avec la soupape (2) et d'entraîner l'obturateur de celle-ci (280) ;
c) un système d'engagement manuel (506) comprenant une interface d'entraînement manuel (506) disposée pour permettre l'engagement réversible d'un levier de manoeuvre (6, 6') avec l'interface et la commande de l'obturateur rotatif (280) par l'intermédiaire du levier,
**caractérisé en ce que** le système comprend un élément mobile de commutation (508) agencé pour coulisser au moins par rapport à l'obturateur (280) et/ou aux parties restantes de l'actionneur entraîné par moteur (1), de façon à entraîner l'engagement et le désengagement réversibles de l'actionneur (1) avec le, et à partir de l'obturateur (280), ladite interface d'entraînement manuel (506) étant formée sur l'élément mobile de commutation (508).

2. Système selon la revendication 1, comprenant un assemblage de fixation (3) comportant, à son tour :
- un logement de l'assemblage (32), comprenant une première interface de connexion à travers laquelle le logement (32) peut être fixé, d'une façon réversible, sur la soupape (2), et une seconde interface de connexion (36) à travers laquelle le logement (32) peut être fixé, d'une façon réversible, sur l'actionneur entraîné par moteur (1) ; et
- un arbre de connexion (50') logé à l'intérieur du logement de l'assemblage(32) et agencé pour tourner par rapport à lui au moins autour d'un axe de rotation (AS) de façon à entraîner l'obturateur rotatif (280).

3. Système selon la revendication 2, dans lequel l'élément mobile de commutation (508) est agencé pour coulisser au moins le long de l'axe de rotation (AS) de l'arbre de connexion (50') et/ou de l'obturateur mobile (280) de façon à entraîner l'engagement et le désengagement réversibles de l'actionneur (1) avec le, et à partir de l'obturateur (280).

4. Système selon la revendication 2 ou 3, dans lequel l'assemblage de fixation (3) est agencé pour se fixer d'une façon réversible sur la soupape (2) et comprend au moins l'un du système d'engagement entraîné par moteur (502) et du système d'engagement manuel (506).

5. Système selon l'une ou plusieurs des revendications précédentes, dans lequel le système d'engagement manuel comprend l'interface d'entraînement manuel (506) formée sur l'arbre de connexion (50') et agencé pour permettre l'engagement réversible d'un levier de manoeuvre (6') avec l'interface et la commande de l'obturateur rotatif (280) par le levier.

6. Système selon l'une ou plusieurs des revendications précédentes, dans lequel l'interface d'entraînement manuel (506) comprend un ou plusieurs éléments choisis à partir du groupe suivant : un trou agencé pour recevoir une extrémité ou une autre partie d'un levier ; un siège concave, une partie en saillie mâle, une partie prismatique cylindrique, conique ou tronconique, pyramidale ou pyramidale tronquée, une bague, une surface filetée.

7. Système selon l'une ou plusieurs des revendications 2 à 6, dans lequel au moins l'un du logement de l'assemblage (32) et de l'arbre de connexion (50') définit un passage d'entraînement à travers lequel un levier de manoeuvre (6') peut atteindre l'interface d'entraînement manuel (506), dans lequel ledit passage présente une configuration et/ou une dimension variable.

8. Système selon l'une au moins des revendications 2 et 5, dans lequel le logement de l'assemblage(32) définit une ouverture (320) à travers laquelle un levier de manoeuvre (6') peut atteindre l'interface d'entraînement manuel (506).

9. Système selon l'une ou plusieurs des revendications 2 à 8, dans lequel le logement de l'assemblage(32) et au moins une partie de l'arbre de connexion(50') peuvent se déplacer l'un par rapport à l'autre de façon à passer d'une position de manoeuvre entraînée par moteur, dans laquelle le passage d'entraînement empêche l'interface d'entraînement manuel (506) d'être atteinte sur une étendue plus grande par un levier de manoeuvre (6'), à une position de manoeuvre manuelle dans laquelle le passage d'entraînement empêche l'interface d'entraînement manuel (506) d'être atteinte par le levier de manoeuvre (6') sur une étendue moindre que dans la position de manoeuvre entraînée par moteur.

10. Système selon au moins la revendication 8, dans lequel l'ouverture (320) peut être déplacée par rapport au trou (506) appartenant à l'interface d'entraînement manuel, de façon à ouvrir ou fermer le passage d'entraînement suivant une étendue variable.

11. Système selon au moins la revendication 9, comprenant un actionneur entraîné par moteur (1) fixé sur l'assemblage de fixation (3), dans lequel au moins, dans la position de manoeuvre entraînée par moteur, le système d'engagement entraîné par moteur (502) est connecté avec au moins l'un de l'arbre de connexion (50') et de l'obturateur de rotation (280) de façon à pouvoir entraîner l'obturateur rotatif (280).

12. Système selon au moins la revendication 9, comprenant un actionneur entraîné par moteur (1) fixé à l'assemblage de fixation, dans lequel au moins dans la position de manoeuvre manuelle, le système d'engagement entraîné par moteur est déconnecté d'au moins l'un de l'arbre de connexion (50') et de l'obturateur rotatif (280), de sorte qu'il n'entraîne pas l'obturateur rotatif (280).

13. Système selon la revendication 2, dans lequel le logement de l'assemblage(32) et l'élément mobile de commutation (508) peuvent se déplacer l'un par rapport à l'autre en coulissant le long de l'axe de rotation (AS).

14. Système selon l'une ou plusieurs des revendications précédentes, comprenant un levier de manoeuvre (6') agencé pour s'engager de façon réversible avec le système d'engagement manuel (506) de façon à permettre l'entraînement de l'obturateur rotatif (280).

15. Système selon la revendication 14, dans lequel le levier de manoeuvre (6') possède une extrémité pointue ou conique (60) agencée de façon à passer à travers le passage d'entraînement lorsque le système se trouve dans la position de manoeuvre entraînée par moteur, et à élargir ce passage de façon à déconnecter l'un de l'autre l'actionneur entraîné par moteur (1) et l'obturateur rotatif (280) .

16. Système selon la revendication 15, dans lequel le levier de manoeuvre (6') est capable d'élargir le passage d'entraînement lorsqu'il est inséré à travers l'ouverture (320).

17. Kit de fourniture comprenant :
a) un système d'entraînement manuel et automatique destiné à des soupapes selon l'une ou plusieurs des revendications 1 à 16,
b) un levier de manoeuvre (6') agencé de façon à s'engager de façon réversible avec le système d'engagement manuel (506) du système d'entraînement de façon à permettre l'entraînement de l'obturateur rotatif (280).
